# EUROPÄISCHE PATENTSCHRIFT

(11) **EP 1 970 228 B1**
(45) Veröffentlichungstag und Bekanntmachung des Hinweises auf die Patenterteilung: **28.04.2010**
(21) Anmeldenummer: 08003233.7
(22) Anmeldetag: 22.02.2008
(51) Int. Cl.: B60G 17/02, B60G 11/06, B60G 15/06, H02K 7/06, F16F 15/02

(54) **Höhenverstellvorrichtung für Kraftfahrzeuge**
Height adjustment device for motor vehicles
Dispositif de réglage en hauteur pour véhicules automobiles

(30) Priorität: 14.03.2007 DE 102007012202; 26.10.2007 DE 102007051299
(43) Veröffentlichungstag der Anmeldung: 17.09.2008
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 1 479 542
- EP-A- 1 681 187
- WO-A-2006/012858
- DE-A1- 10 144 111
- DE-A1- 19 510 032
- FR-A- 2 840 257
- JP-A- 2001 301 436
- JP-A- 2005 106 106
- JP-A- 2005 188 613

## Beschreibung

Die Erfindung betrifft eine Höhenverstellvorrichtung für Kraftfahrzeuge gemäß dem Oberbegriff des Patentanspruches 1.

Eine Höhenverstellvorrichtung der gattungsgemäßen Art ist beispielsweise in der DE 195 10 032 C2. beschrieben. Dabei sind ein Teleskop-Stoßdämpfer, eine schraubenförmige Tragfeder und ein Gewindeschraubtrieb mit einer Stellhülse, einer Gewindemutter und dazwischen geschalteten Wälzkörpern zu einer Baueinheit kombiniert. Das obere Ende der Tragfeder liegt dabei unterhalb des Gewindeschraubtriebes, wodurch die Baueinheit eine relativ große Baulänge aufweist.

Die Stellhülse der oben angegebenen Höhenverstellvorrichtung wird mittels eines externen Antriebsmotors drehbetätigt. Die Getriebeverbindung zwischen dem Antriebsmotor und der Stellhülse ist jedoch mit hohem Raumbedarf realisiert. So weist die Stellhülse an ihrer oberen Stirnseite eine Außenverzahnung auf, die mit einem Antriebsritzel des Elektromotors kämmt. Radial innerhalb der Stellhülse ist eine drehfeste Führungshülse angeordnet, auf der die Stellhülse drehbar gelagert ist.

Aus der JP 2005 188613 A ist eine Höhenverstellvorrichtung für ein Kraftfahrzeug bekannt, die zwischen einem höhenverstellbaren Federteller einer Tragfeder einer Radaufhängung eines Kraftfahrzeuges und dem Fahrzeugaufbau angeordnet ist. Ein Antriebsmotor ist über eine Getriebestufe mit einem drehbar gelagerten Stellring trieblich verbunden. Die zwischen dem Antriebsmotor und dem Stellring geschaltete Getriebestufe ist innerhalb des Stellrings angeordnet. Aus der DE 101 44 111 A1 ist eine elektromechanische Niveauregulierung eines Kraftfahrzeuges bekannt, bei der eine Tragfeder zwischen einer ersten Anlagestelle am Fahrzeugaufbau und einer zweiten Anlagestelle am Radträger angeordnet ist. Die erste Anlagestelle am Fahrzeugaufbau ist mittels eines Elektroantriebs gegenüber dem Fahrzeugaufbau verstellbar, indem der Elektroantrieb einen mit der ersten Anlagestelle verbundenen Gewindetrieb betätigt. Aus der WO 2006/012858 A ist ein Gewindefahrwerk zur Höhenverstellung eines Kraftfahrzeuges bekannt, bei der eine Tragfeder zwischen einer oberen Federaufnahme und einer unteren Federaufnahme angeordnet ist. Die untere Federaufnahme ist derart ausgebildet, dass die Tragfeder in einer gewissen Lage bezüglich der Achsaufnahmevorrichtung gehalten werden kann, wobei die untere Federaufnahme höhenverstellbar ist. Aus der JP 2005 106106 A ist eine weitere Höhenverstellvorrichtung bekannt, bei der der Fahrzeugaufbau mittels eines Antriebsmotors höhenverstellt werden kann.

Aufgabe der Erfindung ist es, eine gattungsgemäße Höhenverstellvorrichtung bereitzustellen, die einen geringeren Bauraum erfordert und die baulich günstig in ein Kraftfahrzeug einbaubar und ggf. nachrüstbar ist.

Diese Aufgabe wird erfindungsgemäß mit den Merkmalen des Patentanspruches 1 gelöst. Vorteilhafte Weiterbildungen der Erfindung beinhalten die weiteren Patentansprüche.

Gemäß dem kennzeichnenden Teil des Patentanspruches 1 ist die zwischen dem Antriebsmotor und der Stellhülse geschaltete Getriebestufe nicht außerhalb, sondern innerhalb der Stellhülse angeordnet. Dadurch reduziert sich der Bauraum der Höhenverstellvorrichtung insbesondere in Radialrichtung. Dadurch kann eine triebliche Verbindung zwischen der Getriebestufe und der Stellhülse vorteilig über eine Innenverzahnung erfolgen. Eine solche Innenverzahnung weist im Vergleich zur Außenverzahnung eine wesentlich größere Verzahnungs-Überdeckung auf, die in Hinblick auf die Festigkeit und Geräuschentwicklung günstig ist.

Bevorzugt kann die Getriebestufe eine einfach herstellbare Stirnradstufe mit außenverzahnten Getrieberädern sein, die einen geringen Bauraum innerhalb der Stellhülse einnimmt. Im verbleibenden freien Stellhülsen-Innenraum kann zur weiteren Reduzierung des Raumbedarfs der Verstellvorrichtung der Antriebsmotor angeordnet werden.

Vorteilhaft kann ein Antriebsritzel des Antriebsmotors, vorzugsweise ein Elektromotor, innerhalb der Stellhülse positioniert sein und mit einer Innenverzahnung der Stellhülse mittelbar oder unmittelbar zusammenwirken. Die Stellhülse ist Teil eines Kugelgewindetriebes, dessen Kugelmutter radial außerhalb der Stellhülse und innerhalb der Tragfeder angeordnet ist. Damit gelingt es, die Höhenverstellvorrichtung axial besonders kurz auszubilden, so dass diese ggf. sogar nachrüstbar ist. Durch den radial innenliegenden Stelltrieb (Antriebsritzel, Innenverzahnung der Stellhülse) kann die Stellhülse und damit verbunden die Kugelmutter einen größeren Durchmesser innerhalb der Tragfeder aufweisen, so dass geringere Stellkräfte erforderlich und die Robustheit des Kugelgewindetriebes erhöht sind.

Der axial verstellbare Federteller kann dabei fertigungstechnisch besonders günstig oberhalb des Kugelgewindetriebes an der korrespondierenden Stirnseite der Kugelmutter angeformt sein.

Ferner kann vorteilhaft die Kugelmutter über einen radial nach innen ragenden Ringflansch in Umfangsrichtung formschlüssig auf einem Abschnitt der Führungshülse verschiebbar geführt sein. Dies kann z. B. durch eine Kerbverzahnung zwischen dem Abschnitt der Führungshülse und dem Ringflansch bewerkstelligt sein.

Des weiteren kann in vorteilhafter Weise das Antriebsritzel des Elektromotors mittelbar über ein an dem Gehäuse der Vorrichtung gelagertes Zwischenzahnrad auf die Innenverzahnung der Stellhülse treiben. Somit können sowohl das Übersetzungsverhältnis zwischen Elektromotor und Kugelschraubtrieb als auch die räumliche Lage des Elektromotors optimal auf die konstruktiven Gegebenheiten ausgerichtet werden.

Das Gehäuse der Vorrichtung kann bevorzugt durch eine aufbauseitige Bodenplatte und eine radial innenliegende Führungshülse gebildet sein, wobei die Stellhülse auf der Führungshülse über zwei axial zueinander beabstandete Wälzlager drehbar gelagert ist. Daraus resultiert eine besonders robuste und fertigungstechnisch einfach beherrschbare Konstruktion mit präziser Funktion des Kugelgewindetriebes. Die Wälzlager können z. B. handelsübliche Schrägkugellager sein.

Des weiteren können die Antriebswelle des das Antriebsritzel tragenden Elektromotors und/oder das Zwischenzahnrad in der Bodenplatte des Gehäuses drehbar gelagert sein. Dabei kann baulich und räumlich günstig der Elektromotor innerhalb der Führungshülse und unterhalb der Bodenplatte angeordnet sein.

Alternativ kann jedoch der Elektromotor oberhalb der Bodenplatte des Gehäuses derart angeordnet sein, dass er in den Hohlraum eines benachbarten Längsträgers des Aufbaues des Kraftfahrzeuges einragt oder zumindest benachbart zum Längsträger positioniert ist. Der Elektromotor als Teil der Höhenverstellvorrichtung ist somit besonders geschützt und schwingungstechnisch stabil angeordnet.

Besonders vorteilhaft können der Elektromotor, das Gehäuse, der Kugelschraubtrieb und der mit dessen Kugelmutter verbundene Federteller eine auf die Tragfeder aufsteckbare Baueinheit bilden.

Des weiteren können zwischen der Bodenplatte des Gehäuses und dem verstellbaren Federteller sowie zwischen einem unteren Radialflansch der Führungshülse und dem rotationssymmetrischen Außenumfang der Kugelmutter jeweils eine gummielastische Schutzmanschette vorgesehen sein, die Feuchtigkeit und Schmutz von den mechanisch beweglichen Teilen der Höhenverstellvorrichtung fernhält.

In einem anderen Ausführungsbeispiel kann die Kugelmutter ebenso radial außerhalb der Stellhülse angeordnet sein, wobei jedoch der axial verstellbare Federteller unterhalb des Kugelgewindetriebs an der korrespondierenden Stirnseite der Kugelmutter angeformt ist und die Kugelmutter somit oberhalb der Tragfeder angeordnet ist und dort die Kugelmutter bei einer Projektion in Richtung der Federmittelachse den Innendurchmesser der Tragefeder nicht überschreitet.

Ausführungsbeispiele der Erfindung sind im folgenden mit weiteren Einzelheiten näher erläutert.
- **Figur 1**: zeigt grob schematisch einen in einer senkrechten Fahrzeugquerebene und durch die Mittelachse einer schraubenförmigen Tragfeder verlaufenden Schnitt einer Höhenverstellvorrichtung, die an einem aufbauseitigen Längsträger des Kraftfahrzeuges angeordnet ist.
- **Figur 2**: Schnittführung analog Figur 1, wobei die Kugelmutter oberhalb der Feder angeordnet ist, aber bei einer Projektion in Richtung Federmittelachse den Innendurchmesser der Feder nicht überschreitet.

Die Höhenverstellvorrichtung zur Einstellung verschiedener Niveaustellungen des Kraftfahrzeuges an einer nicht dargestellten, hinteren Radaufhängung setzt sich im wesentlichen zusammen aus einem Elektromotor 10, einem Gehäuse 12 und einem Kugelgewindetrieb 14, an dem ein ringförmiger Federteller 16 als aufbauseitige Abstützung einer Tragfeder 18 (Schraubendruckfeder) angeordnet ist.

Die Tragfeder 18 stützt sich andererseits an einem nicht dargestellten Querlenker der Radaufhängung ab, an dem ggf. auch ein benachbart zur Tragfeder 18 angeordneter Teleskop-Stoßdämpfer angeschlossen sein kann. Die Abstützung kann auch unmittelbar am Radträger erfolgen.

Das Gehäuse 12 der Höhenverstellvorrichtung ist aus einer oberen, scheibenförmigen Bodenplatte 20 und einer daran angeformten, nach unten abragenden Führungshülse 22 gebildet.

Auf der Führungshülse 22 ist über zwei axial wie ersichtlich zueinander beabstandete Wälzlager 24 bzw. Schrägkugellager die radial innenliegende Stellhülse 26 des Kugelgewindetriebes 14 drehbar, jedoch axial unverschieblich gelagert.

Die Stellhülse 26 weist an einem Abschnitt 26a ihres Außenumfanges schraubenförmige Kugelbahnen (ohne Bezugszeichen) auf, die mit am Innenumfang der hülsenförmigen Kugelmutter 28 des Kugelgewindetriebes 14 eingearbeiteten Kugelbahnen und dazwischen angeordneten Kugeln 30 in bei Kugelgewindetrieben bekannter Weise zusammenwirken.

An das untere Ende der Kugelmutter 28 ist ein radial nach innen ragender Ringflansch 28a angeformt, der über eine allgemein mit 32 bezeichnete Verdrehsicherung in Umfangsrichtung formschlüssig auf der Führungshülse 22 geführt ist.

Der Federteller 16 ist wie aus der Zeichnung ersichtlich an die obere Stirnseite der Kugelmutter 28 angeformt, so dass der Kugelgewindetrieb 14 innerhalb der Tragfeder 18 liegt.

An der Stellhülse 26 ist in Nähe des oberen Wälzlagers 24 ein Zahnrad mit einer Innenverzahnung 34 angeordnet, das über ein Zwischenzahnrad 36 mit dem Antriebsritzel 40 des Elektromotors 10 trieblich verbunden ist. Das Antriebsritzel 40 und das Zwischenzahnrad 36 liegen wie ersichtlich innerhalb der Stellhülse 26, wobei sich das Zwischenzahnrad 36 durch eine Ausnehmung 22a der Führungshülse 22 erstreckt.

Das Zwischenzahnrad 36 ist über Lagerstellen 42, 44 an der Bodenplatte 20 und an der Führungshülse 22 drehbar gelagert. Auch das Antriebsritzel 40 bzw. deren Antriebswelle 46 ist in der Bodenplatte 20 über eine Lagerstelle 48 drehbar gelagert; die Lagerung des Antriebsritzels 40 kann aber auch im Gehäuse des Elektromotors 10 angeordnet sein, der in nicht dargestellter Weise an der Bodenplatte 20 des Gehäuses 12 befestigt ist. In letzterem Falle wäre in der Bodenplatte 20 anstatt der Lagerstelle 48 eine Ausnehmung für das Antriebsritzel 40 vorzusehen.

Zwischen der Bodenplatte 20 des Gehäuses 12 und dem verstellbaren Federteller 16 ist wie ersichtlich eine gummielastische Schutzmanschette 50 angeordnet. Eine weitere Schutzmanschette 52 erstreckt sich zwischen einem unteren Radialflansch 22b der Führungshülse 22 und dem rotationssymmetrischen Außenumfang der Kugelmutter 28 des Kugelgewindetriebes 14.

Die Höhenverstellvorrichtung soweit beschrieben ist als eine Baueinheit ausgeführt, die wie aus der Zeichnung ersichtlich auf die Tragfeder 18 aufsteckbar und mit dieser (bzw. mit der gesamten, nicht dargestellten Radaufhängung) am Aufbau des Kraftfahrzeuges montierbar ist.

Der nur angedeutete Aufbau weist hier einen Abschnitt 54 der hinteren Radlaufschale und einen benachbart dazu angeordneten Längsträger 56 auf. Dabei ist die Bodenplatte 20 der Höhenverstellvorrichtung über nicht dargestellte Schraubverbindungen an der Unterseite des Längsträgers 56 befestigt, wobei der Elektromotor 10 durch eine Ausnehmung 56a des Längsträgers 56 in den freien Hohlraum 58 des Längsträgers 56 einragt.

Da der Kugelschraubtrieb 14 und der vorgeschaltete Zahnradtrieb mit dem Antriebsritzel 40, dem Zwischenzahnrad 36 und der Innenverzahnung 34 an der Stellhülse 26 nicht selbsthemmend wirken, ist in dem Elektromotor 10 eine elektromagnetisch gesteuerte Bremse vorgesehen, die das Antriebsritzel 40 im stromlosen Zustand des Elektromotors 10 festbremst. Ferner ist ein Winkelcodierer als Messeinrichtung vorgesehen, mittels der die Momentanstellung der Kugelmutter 28 (entspricht dem Fahrzeugniveau) relativ zur Stellhülse 26 bzw. zum Aufbau 54, 56 des Kraftfahrzeuges erfassbar und regelungstechnisch auswertbar ist.

Durch das zumindest eine Zwischenzahnrad 36 kann die Position des Elektromotors 10 mit dessen Zahnritzel 40 relativ zur Bodenplatte 20 des Gehäuses 12 je nach den konstruktiven Gegebenheiten verschoben und ggf. auch das Übersetzungsverhältnis geändert werden.

Bei einem Ansteuern des Elektromotors 10 wird über den Zahnradtrieb mit dem Antriebsritzel 40, dem Zwischenzahnrad 36 und der Innenverzahnung 34 die Stellhülse 26 in der einen oder der anderen Drehrichtung verdreht, wodurch die Kugelmutter 28 mit dem Federteller 16 axial verschoben wird. Dies führt je nach Beladung und Belastung des Kraftfahrzeuges zu einer Niveauveränderung oder zu einer stärkeren Vorspannung (oder umgekehrt) der Tragfeder 18.

In an sich bekannter Weise kann somit ein Nick- und Wankausgleich des Kraftfahrzeuges und/oder eine Niveauverstellung gesteuert werden.

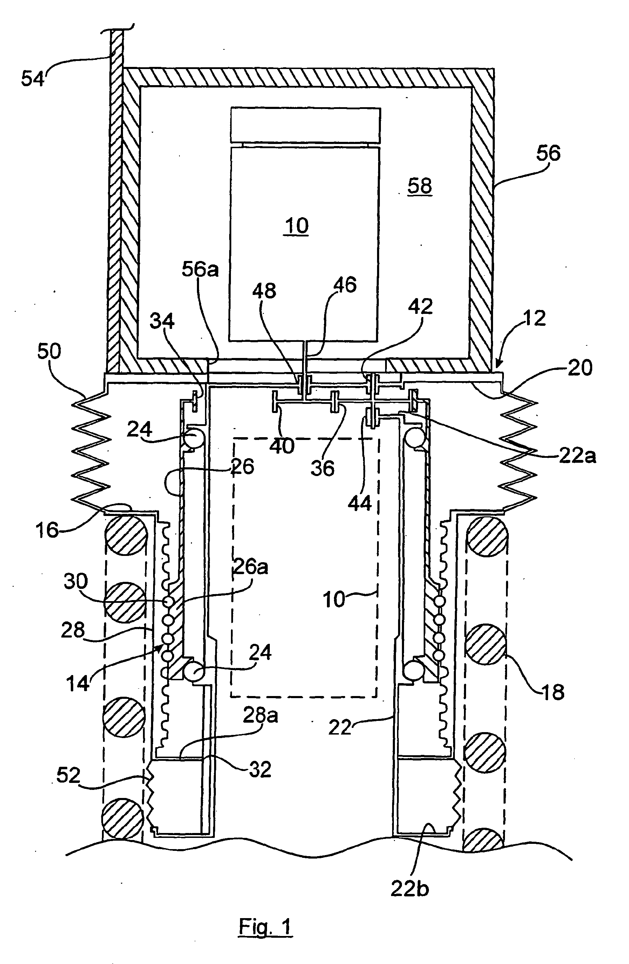

Abweichend vom Ausführungsbeispiel kann der Elektromotor 10 auch unterhalb der Bodenplatte 20 des Gehäuses 12 angeordnet und befestigt sein, wie es in der Fig. 1 gestrichelt dargestellt ist.

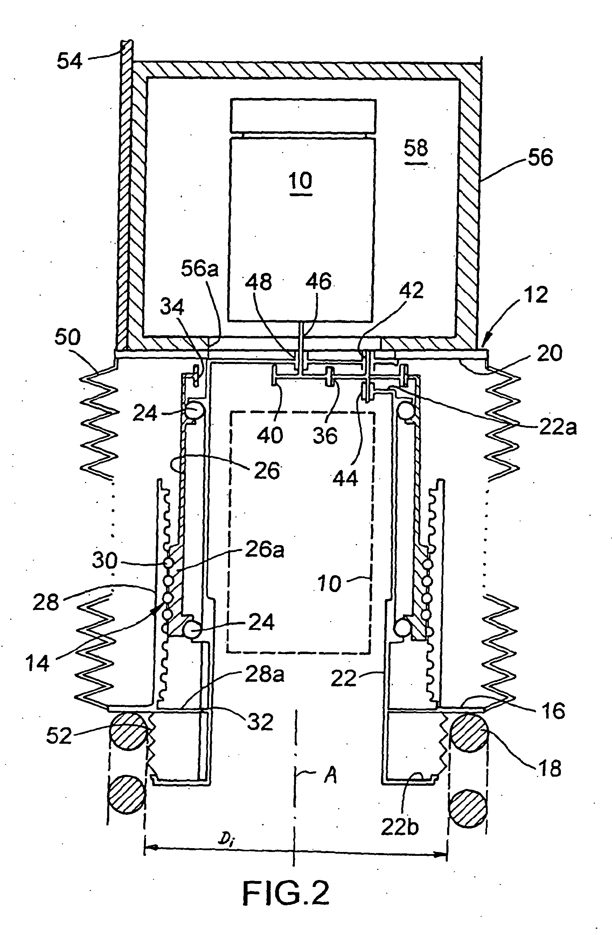

Figur 2 zeigt eine Schnittführung, wie sie auch bei der Figur 1 zugrundegelegt wurde.

Die Kugelmutter (29) ist radial außerhalb der Stellhülse (27) angeordnet. Der axial verstellbare Federteller (16) ist jedoch unterhalb des Kugelgewindes (14) an der korrespondierenden Stirnseite der Kugelmutter (29) angeformt.
Damit ist die Kugelmutter (29) oberhalb der Tragfeder (18) angeordnet. Erfolgt bei dieser Position der Kugelmutter (29) eine Projektion in Richtung der Mittelachse (A) der Tragfeder, so erkennt man, dass die Kugelmutter (29) bei dieser Projektionsrichtung innerhalb des Innendurchmessers (Dᵢ) der Tragfeder (18) liegt.
Die übrigen technischen Merkmale der Figur 1 sind auch bei Figur 2 wiederzufinden.

## Patentansprüche

1. Höhenverstellvorrichtung für Kraftfahrzeuge, die zwischen einem höhenverstellbaren Federteller (16) einer Tragfeder (18) einer Radaufhängung des Kraftfahrzeuges und dem Fahrzeugaufbau (54, 56) angeordnet ist und bei der ein Antriebsmotor (10) über eine Getriebestufe (34, 36, 40) mit einer drehbar gelagerten Stellhülse (26) zur Höhenverstellung des Federtellers (16) zusammenwirkt, **dadurch gekennzeichnet, dass** die zwischen den Antriebsmotor (10) und der Stellhülse (26) geschaltete Getriebestufe (34, 36, 40) innerhalb der Stellhülse (26) angeordnet ist, und die Stellhülse (26) Teil eines Kugelgewindetriebes (14) ist, dessen Kugelmutter (28) radial außerhalb der Stellhülse (26) und innerhalb der Tragfeder (18) angeordnet ist.

2. Höhenverstellvorrichtung nach Anspruch 1, **dadurch gekennzeichnet, dass** die Getriebestufe ein innerhalb der Stellhülse (26) angeordnetes motorseitiges Antriebsritzel (40) aufweist, das mit einer Innenverzahnung (34) der Stellhülse (26) mittelbar oder unmittelbar zusammenwirkt.

3. Höhenverstellvorrichtung nach einem der vorhergehenden Ansprüche, **dadurch gekennzeichnet, dass** die innerhalb der Stellhülse (26) angeordnete Getriebestufe (34, 36, 40) eine Stirnradstufe mit außenverzahnten Getrieberädern ist.

4. Höhenverstellvorrichtung nach Anspruch 3, **dadurch gekennzeichnet, dass** der axial verstellbare Federteller (16) oberhalb des Kugelgewindetriebes (14) an der korrespondierenden Stirnseite der Kugelmutter (28) angeformt ist.

5. Höhenverstellvorrichtung nach Anspruch 3 oder 4, **dadurch gekennzeichnet, dass** die Kugelmutter (28) über einen radial nach innen ragenden Ringflansch (28a) in Umfangsrichtung formschlüssig auf einem Abschnitt der Führungshülse (22) verschiebbar geführt ist.

6. Höhenverstellvorrichtung nach einem der Ansprüche 2 bis 5, **dadurch gekennzeichnet, dass** das Antriebsritzel (40) des Antriebsmotors (10) mittelbar über ein Zwischenzahnrad (36) auf die Innenverzahnung (34) der Stellhülse (26) treibt.

7. Höhenverstellvorrichtung nach einem der vorhergehenden Ansprüche, **dadurch gekennzeichnet, dass** radial innerhalb der Stellhülse (26) eine Führungshülse (22) vorgesehen ist, auf der die Stellhülse (26) drehbar gelagert ist.

8. Höhenverstellvorrichtung nach einem der Ansprüche, **dadurch gekennzeichnet, dass** die Führungshülse (22) zusammen mit einer aufbauseitigen Bodenplatte (20) ein Gehäuse (12) der Vorrichtung bildet, wobei vorzugsweise die Antriebswelle (46) des das Antriebsritzel (40) tragenden Elektromotors (10) und/oder das Zwischenzahnrad (36) in der Bodenplatte (20) des Gehäuses (12) drehbar gelagert sind.

9. Höhenverstellvorrichtung nach einem der vorhergehenden Ansprüche, **dadurch gekennzeichnet, dass** der Antriebsmotor (10) innerhalb der Stellhülse (26) oder der Führungshülse (22) angeordnet ist.

10. Höhenverstellvorrichtung nach einem der vorhergehenden Ansprüche, **dadurch gekennzeichnet, dass** der Antriebsmotor (10) axial oberhalb der Stellhülse (26) derart angeordnet ist, dass er in einen Hohlraum (58) eines benachbarten Längsträgers (56) des Aufbaues des Kraftfahrzeuges einragt.

11. Höhenverstellvorrichtung nach einem der Ansprüche 8 bis 10, **dadurch gekennzeichnet, dass** der Antriebsmotor (10), das Gehäuse (12), der Kugelschraubtrieb (14) und der mit dessen Kugelmutter (28) verbundene Federteller (16) eine auf die Tragfeder (18) aufsteckbare Baueinheit bilden.

12. Höhenverstellvorrichtung nach einem der Ansprüche 8 bis 11, **dadurch gekennzeichnet, dass** zwischen der Bodenplatte (20) des Gehäuses (12) und dem verstellbaren Federteller (16) eine gummielastische Schutzmanschette (50) vorgesehen ist.

13. Höhenverstellvorrichtung nach einem der vorhergehenden Ansprüche 7 bis 12, **dadurch gekennzeichnet, dass** zwischen einem unteren Radialflansch (22b) der Führungshülse (22) und dem rotationssymmetrischen Außenumfang der Kugelmutter (28) eine gummielastische Schutzmanschette (52) vorgesehen ist.

14. Höhenverstellvorrichtung nach Anspruch 1 oder einem der Ansprüche 5 bis 13, **dadurch gekennzeichnet, dass** die Kugelmutter (28) radial außerhalb der Stellhülse (26) angeordnet ist, wobei der axial verstellbare Federteller (16) unterhalb des Kugelgewindetriebs (14) an der korrespondierenden Stirnseite der Kugelmutter (28) angeformt ist und die Kugelmutter (28) somit oberhalb der Tragfeder (18) angeordnet ist und dort die Kugelmutter (28) bei einer Projektion in Richtung der Mittelachse (A) der Tragfeder (18) innerhalb des Innendurchmessers (Dⱼ) der Tragfeder (18) erscheint.

## Claims

1. Height adjustment device for motor vehicles, which is arranged between a vertically adjustable spring seat (16) of a supporting spring (18) of a wheel suspension system of the motor vehicle and the vehicle body (54, 56), and in which a drive motor (10) interacts, via a gearbox stage (34, 36, 40), with a rotatably mounted adjusting sleeve (26) for vertically adjusting the spring seat (16), **characterized in that** the gearbox stage (34, 36, 40) which is connected between the drive motor (10) and the adjusting sleeve (26) is arranged inside the adjusting sleeve (26), and the adjusting sleeve (26) is part of a ball screw (14) whose ball nut (28) is arranged radially outside the adjusting sleeve (26) and inside the supporting spring (18).

2. Height adjustment device according to Claim 1, **characterized in that** the gearbox stage has a motor-side drive pinion (40) which is arranged inside the adjusting sleeve (26) and interacts indirectly or directly with an internal toothing (34) of the adjusting sleeve (26).

3. Height adjustment device according to one of the preceding claims, **characterized in that** the gearbox stage (34, 36, 40) which is arranged inside the adjusting sleeve (26) is a spur gear stage with externally toothed gearwheels.

4. Height adjustment device according to Claim 3, **characterized in that** the axially adjustable spring seat (16) is integrally formed on the corresponding end side of the ball nut (28) above the ball screw (14).

5. Height adjustment device according to Claim 3 or 4, **characterized in that** the ball nut (28) is guided in a sliding, positively locking fashion in the circumferential direction on a section of the guide sleeve (22) by means of an annular flange (28a) which projects radially inwards.

6. Height adjustment device according to one of Claims 2 to 5, **characterized in that** the drive pinion (40) of the drive motor (10) indirectly drives the internal toothing (34) of the adjusting sleeve (26) via an intermediate gearwheel (36).

7. Height adjustment device according to one of the preceding claims, **characterized in that** a guide sleeve (22) on which the adjusting sleeve (26) is rotatably mounted is provided radially inside the adjusting sleeve (26).

8. Height adjustment device according to one of the claims, **characterized in that** the guide sleeve (22) forms, together with a body-side base plate (20), a housing (12) of the device, wherein the drive shaft (46) of the electric motor (10), which supports the drive pinion (40), and/or the intermediate gearwheel (36) are preferably rotatably mounted in the base plate (20) of the housing (12).

9. Height adjustment device according to one of the preceding claims, **characterized in that** the drive motor (10) is arranged inside the adjusting sleeve (26) or the guide sleeve (22).

10. Height adjustment device according to one of the preceding claims, **characterized in that** the drive motor (10) is arranged axially above the adjusting sleeve (26) in such a way that said drive motor (10) projects into a cavity (58) in an adjacent longitudinal member (56) of the body of the motor vehicle.

11. Height adjustment device according to one of Claims 8 to 10, **characterized in that** the drive motor (10), the housing (12), the ball screw (14) and the spring seat (16) which is connected to the ball nut (28) of the latter form a structural unit which can be fitted onto the supporting spring (18).

12. Height adjustment device according to one of Claims 8 to 11, **characterized in that** a rubber-elastic protective collar (50) is provided between the base plate (20) of the housing (12) and the adjustable spring seat (16).

13. Height adjustment device according to one of the preceding Claims 7 to 12, **characterized in that** a rubber-elastic protective collar (52) is provided between a lower radial flange (22b) of the guide sleeve (22) and the rotationally symmetrical external circumference of the ball nut (28).

14. Height adjustment device according to Claim 1 or one of Claims 5 to 13, **characterized in that** the ball nut (28) is arranged radially outside the adjusting sleeve (26), wherein the axially adjustable spring seat (16) is integrally formed on the corresponding end side of the ball nut (28) and beneath the ball screw (14), and the ball nut (28) is therefore arranged above the supporting spring (18), and in a projection in the direction of the central axis (A) of the supporting spring (18) the ball nut (28) appears there inside the internal diameter (Dᵢ) of the supporting spring (18).

## Revendications

1. Dispositif de réglage en hauteur pour véhicules automobiles, qui est disposé entre une coupelle de ressort (16) réglable en hauteur d'un ressort de support (18) d'une suspension de roue du véhicule automobile et la carrosserie du véhicule (54, 56), et dans lequel un moteur d'entraînement (10) coopère par le biais d'un étage de transmission (34, 36, 40) avec un manchon de commande (26) monté de manière rotative pour le réglage en hauteur de la coupelle de ressort (16), **caractérisé en ce que** l'étage de transmission (34, 36, 40) monté entre le moteur d'entraînement (10) et le manchon de commande (26) est disposé à l'intérieur du manchon de commande (26), et le manchon de commande (26) fait partie d'une vis d'entraînement à bille (14), dont l'écrou à bille (28) est disposé radialement à l'extérieur du manchon de commande (26) et à l'intérieur du ressort de support (18).

2. Dispositif de réglage en hauteur selon la revendication 1, **caractérisé en ce que** l'étage de transmission présente un pignon d'entraînement (40) côté moteur, disposé à l'intérieur du manchon de commande (26), qui coopère avec une denture interne (34) du manchon de commande (26) de manière directe ou indirecte.

3. Dispositif de réglage en hauteur selon l'une quelconque des revendications précédentes, **caractérisé en ce que** l'étage de transmission (34, 36, 40) disposé à l'intérieur du manchon de commande (26) est un étage de pignon droit avec des roues de transmission à denture extérieure.

4. Dispositif de réglage en hauteur selon la revendication 3, **caractérisé en ce que** la coupelle de ressort (16) réglable axialement est façonnée au-dessus de la vis d'entraînement à bille (14) sur le côté frontal correspondant de l'écrou à bille (28).

5. Dispositif de réglage en hauteur selon la revendication 3 ou 4, **caractérisé en ce que** l'écrou à bille (28) est guidé par le biais d'une bride annulaire (28a) saillant radialement vers l'intérieur dans la direction périphérique par engagement par correspondance géométrique de manière déplaçable sur une portion du manchon de guidage (22).

6. Dispositif de réglage en hauteur selon l'une quelconque des revendications 2 à 5, **caractérisé en ce que** le pignon d'entraînement (40) du moteur d'entraînement (10) entraîne la denture interne (34) du manchon de commande (26) de manière indirecte par le biais d'une roue dentée intermédiaire (36).

7. Dispositif de réglage en hauteur selon l'une quelconque des revendications précédentes, **caractérisé en ce que** l'on prévoit radialement à l'intérieur du manchon de commande (26) un manchon de guidage (22) sur lequel le manchon de commande (26) est monté à rotation.

8. Dispositif de réglage en hauteur selon l'une quelconque des revendications précédentes, **caractérisé en ce que** le manchon de guidage (22) forme conjointement avec une plaque de base (20) du côté de la carrosserie un boîtier (12) du dispositif, et de préférence l'arbre d'entraînement (46) du moteur électrique (10) portant le pignon d'entraînement (40) et/ou la roue dentée intermédiaire (36) sont montés à rotation dans la plaque de base (20) du boîtier (12).

9. Dispositif de réglage en hauteur selon l'une quelconque des revendications précédentes, **caractérisé en ce que** le moteur d'entraînement (10) est disposé à l'intérieur du manchon de commande (26) ou du manchon de guidage (22).

10. Dispositif de réglage en hauteur selon l'une quelconque des revendications précédentes, **caractérisé en ce que** le moteur d'entraînement (10) est disposé axialement au-dessus du manchon de commande (26) de telle sorte qu'il pénètre dans une cavité (58) d'un support longitudinal adjacent (56) de la carrosserie du véhicule automobile.

11. Dispositif de réglage en hauteur selon l'une quelconque des revendications 8 à 10, **caractérisé en ce que** le moteur d'entraînement (10), le boîtier (12), la vis d'entraînement à bille (14) et la coupelle de ressort (16) connectée à son écrou à bille (28) forment une unité constructive pouvant être enfoncée sur le ressort de support (18).

12. Dispositif de réglage en hauteur selon l'une quelconque des revendications 8 à 11, **caractérisé en ce que** l'on prévoit entre la plaque de base (20) du boîtier (12) et la coupelle de ressort réglable (16) une manchette de protection en caoutchouc élastomère (50).

13. Dispositif de réglage en hauteur selon l'une quelconque des revendications précédentes 7 à 12, **caractérisé en ce que** l'on prévoit entre une bride radiale inférieure (22b) du manchon de guidage (22) et la périphérie extérieure à symétrie de révolution de l'écrou à bille (28), une manchette de protection en caoutchouc élastomère (52).

14. Dispositif de réglage en hauteur selon la revendication 1 ou selon l'une quelconque des revendications 5 à 13, **caractérisé en ce que** l'écrou à bille (28) est disposé radialement à l'extérieur du manchon de commande (26), la coupelle de ressort (16) réglable axialement étant façonnée en dessous de la vis d'entraînement à bille (14) sur le côté frontal correspondant de l'écrou à bille (28), et l'écrou à bille (28) étant ainsi disposé au-dessus du ressort de support (18), et l'écrou à bille (28) apparaissant à cet endroit dans le cas d'une projection dans la direction de l'axe médian (A) du ressort de support (18) à l'intérieur du diamètre intérieur (Dᵢ) du ressort de support (18).
